(19) **Europäisches Patentamt**

**European Patent Office**

**Office européen des brevets**

(11) Veröffentlichungsnummer: **0 305 669 B1**

(12) **EUROPÄISCHE PATENTSCHRIFT**

(45) Veröffentlichungstag der Patentschrift: **18.03.92**

(21) Anmeldenummer: **88110137.2**

(22) Anmeldetag: **24.06.88**

(51) Int. Cl.5: **B60R 15/00**

(54) **Fahrzeug, insbesondere Reisebus.**

(30) Priorität: **02.09.87 DE 8711899 U**

(43) Veröffentlichungstag der Anmeldung:
**08.03.89 Patentblatt 89/10**

(45) Bekanntmachung des Hinweises auf die
Patenterteilung:
**18.03.92 Patentblatt 92/12**

(84) Benannte Vertragsstaaten:
**DE ES FR GB IT NL**

(56) Entgegenhaltungen:
**DE-U- 8 533 556**
**GB-A- 729 228**

(73) Patentinhaber: **Karl Kässbohrer Fahrzeugwerke GmbH
Kässbohrerstrasse 13 Postfach 2660
W-7900 Ulm (Donau)(DE)**

(72) Erfinder: **Preclik, Robert, Ing.-grad.
Lärchenweg 5
W-8879 Ettenbeuren(DE)**
Erfinder: **Schwer, Gerhard
Agathe Streicher Weg 36/1
W-7900 Ulm(DE)**

(74) Vertreter: **Patentanwälte Grünecker, Kinkeldey, Stockmair & Partner
Maximilianstrasse 58
W-8000 München 22(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung bezieht sich auf ein Fahrzeug, insbesondere Reisebus, mit mindestens einer am Fahrzeug angeordneten Wasserzapfstelle für Handwaschbecken, Toilettenbecken oder dergleichen, mit mindestens einem Brauchwassertank und einer Brauchwasserleitung, die die Wasserzapfstelle mit dem Wassertank verbindet, sowie einer geschlossenen Heizwasserleitung mit einem Vorlauf und einem Rücklauf.

Aus der Praxis sind Reisebusse mit Toiletten, Kleinküchen und dergleichen bekannt, zu deren Betrieb Wasserzapfstellen erforderlich sind. Während der Betrieb solcher Einrichtungen in der wärmeren Jahreszeit unproblematisch ist, mußte bislang bei winterlichen Verhältnissen auf die Verwendung einer Toilette mit Wasserspülung verzichtet werden, da die Wasserleitungen bei winterlichen Temperaturen einfrieren würden. Dies ist insbesondere dann der Fall, wenn sogenannte Skireisen unternommen werden, bei denen der Bus für zwei Tage und zwei Nächte an einem Ort abgestellt wird. Das Fahrzeug ist innerhalb kurzer Zeit soweit abgekühlt, daß der Betrieb von Wasserzapfstellen unmöglich ist.

In der Vergangenheit ist man daher bei winterlichen Verhältnissen dazu übergegangen sogenannte chemische Toiletten zu verwenden, also Toiletten ohne Wasserspülung. Das anschließende Säubern der Hände wird, da kein Handwaschbecken vorhanden ist, mittels sogenannter Erfrischungstücher bewerkstelligt. Abgesehen von den mangelhaften hygienischen Umständen läßt sich eine solche chemische Toilette auch nur bis Temperaturen von -10° C betreiben, da bei niedrigeren Temperaturen der Fäkalientank einfriert. Ein Entleeren dieses Tanks nach Beendigung der Reise stellt sich dann als äußerst umständlich dar.

In der DE-U 85 33 556 wird ein System zur Beheizung eines Brauchwassertanks eines Fahrzeugs offenbart. Das Heizsystem umfaßt eine geschlossene Heizwasserleitung, die mit einer vorhandenen Heizungsanlage des Fahrzeugs verbunden ist. Die Heizwasserleitung wird direkt im Brauchwassertank verlegt und dient nur zu dessen Heizung. Durch das Verlegen der Leitung im Tank sind umfangreiche Abdichtungsmaßnahmen erforderlich.

Es ist daher Aufgabe der vorliegenden Erfindung, ein Fahrzeug der im Oberbegriff des Anspruchs 1 genannten Art so zu verbessern, daß das Gesamtsystem aus Wasserzapfstellen, Armaturen, Wassertank und Leitungen beheizt werden kann, wobei keine Abdichtungsprobleme zwischen dem zu beheizenden System und der Heizwasserleitung auftreten.

Diese Aufgabe wird erfindungsgemäß dadurch gelöst, daß die Heizwasserleitung zur Wärmeabgabe an das Brauchwasser zumindest streckenweise dicht neben der Brauchwasserleitung angeordnet ist, den Brauchwassertank umgibt und bis dicht an die Wasserzapfstelle heranreicht, wobei im Verlauf der Heizwasserleitung eine Wasserheizung und eine Umwälzpumpe angeordnet sind.

Hierdurch wird in vorteilhafter Weise erreicht, daß die Heizwasserleitung Wärme an die Brauchwasserleitung abgibt, so daß ein Einfrieren der Brauchwasserleitung nicht zu befürchten ist. Da die Heizwasserleitungen außerhalb des zu heizenden Systems angeordnet sind, ergeben sich keine Abdichtungsprobleme. Demzufolge kann die in der Heizwasserleitung befindliche Flüssigkeit gefahrlos mit einem Frostschutzmittel versehen sein, so daß bei einem Ausfall der Wasserheizung weder diese noch die Umwälzpumpe durch gefrierende Flüssigkeit beschädigt werden kann. Als Wasserheizung kann bei den geringen geforderten Heizleistungen eine Standheizung verwendet werden, wie sie bei Personenkraftwagen zum Vorwärmen des Kühlwassers eingesetzt wird. Weiterhin ist es günstig, wenn die Heizwasserleitung auch den Brauchwassertank umgibt. In dem Brauchwassertank ist zwar ein verhältnismäßig großes Flüssigkeitsvolumen gespeichert, so daß ein Einfrieren des in dem Brauchwassertank befindlichen Wassers nicht so schnell erfolgt, wie in der Brauchwasserleitung; bei längeren Aufenthalten ist ein Erwärmen des Brauchwassertanks jedoch günstig. Durch die dichte Heranführung der Heizwasserleitung bis an die Wasserzapfstellen läßt sich in einfacher Weise auch ein Einfrieren der Wasserzapfstellen verhindern. Dies ist insbesondere dann günstig, wenn der Innenraum des Reisebusses, in dem sich gewöhnlicherweise die Wasserzapfstellen befinden, über längere Zeit nicht geheizt wird.

Besonders vorteilhaft ist es, wenn der Vorlauf der Heizwasserleitung näher an der Brauchwasserleitung angeordnet ist als der Rücklauf. Das Temperaturgefälle zwischen dem Vorlauf und der Brauchwasserleitung ist höher als das zwischen dem Rücklauf und der Brauchwasserleitung, so daß die Wärmeabgabe von der Heizwasserleitung an die Brauchwasserleitung besonders effektiv ist.

Es ist günstig, wenn die Heizwasserleitung die Brauchwasserleitung berührt, da dann die Wärme durch Wärmeleitung übertragen werden kann. Die Heizwasserleitung und die Brauchwasserleitung kann für eine noch bessere Wärmeübertragung mit einer beide Leitungen umgebende Isolation ummantelt sein.

Um den Brauchwassertank auch bei längeren Aufenthalten die nötige Wärmemenge zuführen zu können, ist es besonders zweckmäßig, wenn die Heizwasserleitung an mindestens einer Seite des Brauchwassertanks in im wesentlichen zieharmonikartigen Windungen anliegt.

Die Wärmeübertragung wird noch weiter verbessert, wenn die Windungen an der Unterseite des Brauchwassertanks anliegen, da Wärme stets nach oben steigt.

Eine weitere Verbesserung der Wärmeübertragung läßt sich erreichen, wenn zwischen den Windungen der Heizwasserleitungen Wärmeleitbleche angeordnet sind, die flächig an der Unterseite des Brauchwassertanks anliegen.

Besonders günstig ist es, wenn die Wasserheizung in Durchströmrichtung der Heizwasserleitung im wesentlichen unmittelbar vor dem Brauchwassertank angeordnet ist. In dem Brauchwassertank befindet sich das meiste Wasser, das aufzuheizen ist. Wenn sich die Wasserheizung im wesentlichen unmittelbar vor dem Wassertank befindet, ist das Temperaturgefälle zwischen dem Vorlauf der Heizwasserleitung und dem Brauchwassertank verhältnismäßig hoch, so daß an den Brauchwassertank viel Wärme abgegeben wird. Die Wärmemenge, die nötig ist, um die sich an den Brauchwassertank anschließende Brauchwasserleitung am Einfrieren zu hindern, ist hingegen vergleichsweise gering, so daß dort bereits ein niedrigeres Temperaturgefälle ausreicht.

Da ein ständiges Laufenlassen der Wasserheizung nicht nötig ist, um die Brauchwasserleitung, beispielsweise bei Temperaturen nur dicht unter dem Gefrierpunkt, am Einfrieren zu hindern, ist es günstig, wenn in der Brauchwasserleitung ein Thermostat zur Steuerung der Wasserheizung angeordnet ist. Dieser Thermostat ist zweckmäßig an der überlicherweise kältesten Stelle der Brauchwasserleitung vorgesehen.

Im folgenden wird ein Ausführungsbeispiel der Erfindung anhand einer Zeichnung näher erläutert. Es zeigen:

Fig. 1     einen Längsschnitt durch ein erfindungsgemäßes Fahrzeug, wobei unwesentliche Teile weggebrochen sind,

Fig. 2     einen Querschnitt durch das Fahrzeug aus Fig. 1 entlang der Linie II-II,

Fig. 3     eine Schnittansicht entlang der Linie III-III in Fig. 1.

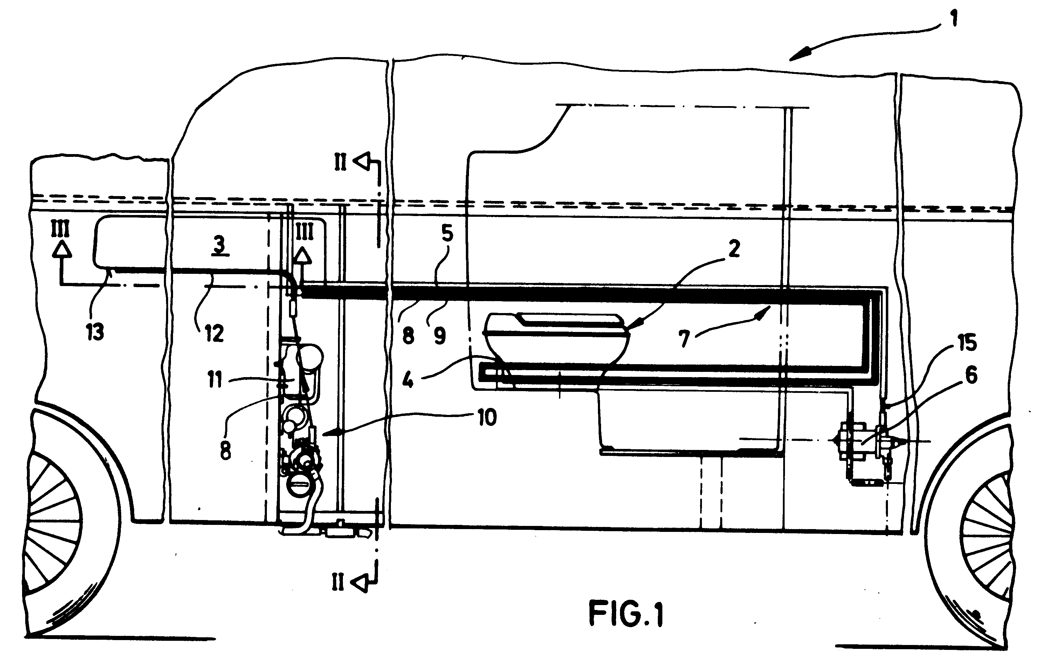

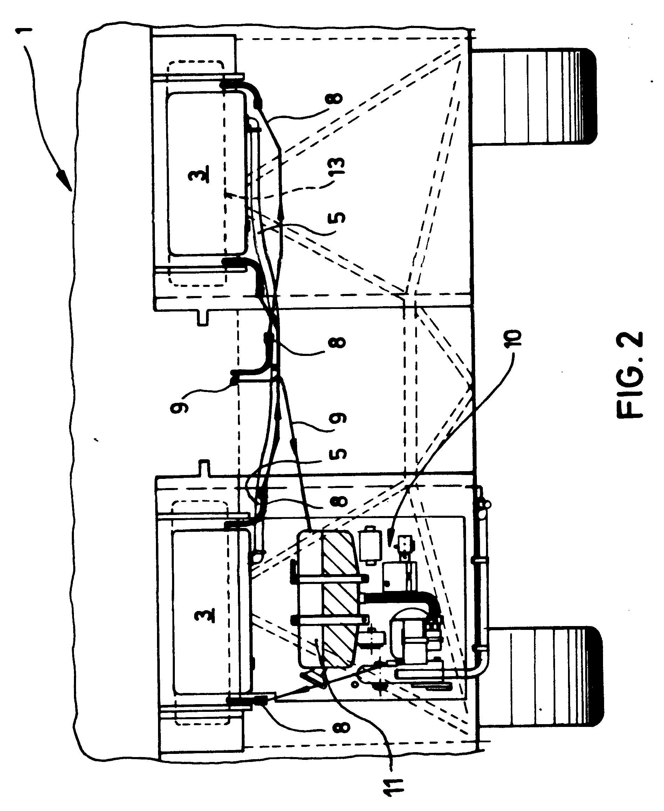

In Fig. 1 ist ein erfindungsgemäßes Fahrzeug 1 dargestellt. Es handelt sich hier um einen Reisebus, der eine Toilette 2 mit Wasserspülung aufweist. Für den Betrieb der Toilette 2 sind daher, wie auch aus Fig. 2 hervorgeht, zwei Brauchwassertanks 3 vorgesehen, die über eine Brauchwasserleitung 5 mit einer Zapfstelle 4 an der Toilette 2 verbunden sind.

Im Verlauf der Brauchwasserleitung 5 ist eine Zapfpumpe 6 angeordnet, die nur bei Betätigung der Zapfstelle 4 anläuft.

Die Brauchwasserleitung 5 führt weiter zu einem Handwaschbecken. Dieses Leitungsstück und das Handwaschbecken sind jedoch der Übersichtlichkeit halber weggelassen.

Wie besonders gut aus Fig. 1 ersichtlich ist, ist dicht neben der Brauchwasserleitung und dazu parallel verlaufend eine geschlossene Heizwasserleitung 7 mit einem Vorlauf 8 und einem Rücklauf 9 angeordnet. Bis auf den Bereich der Brauchwasserleitung 5, an dem die Zapfpumpe 6 angeordnet ist, laufen Brauchwasserleitung 5 und Heizwasserleitung 7 so dicht nebeneinander, daß sie sich berühren. Genauer gesagt berührt der Vorlauf 8 der Heizwasserleitung 7 die Brauchwasserleitung 5.

Zwischen dem Vorlauf 8 und dem Rücklauf 9 der Heizwasserleitung 7 ist eine Wasserheizung 10 angebracht. Bei der Wasserheizung 10 handelt es sich um eine herkömmliche Standheizung, wie sie bei Personenkraftwagen zum Vorwärmen des Kühlwassers des Verbrennungsmotors Verwendung findet. In diese Wasserheizung 10 ist zugleich eine Umwälzpumpe integriert. Oberhalb der Wasserheizung 10 ist ein Ausgleichsgefäß 11 vorgesehen, in welches der Rücklauf 9 der Heizwasserleitung 7 mündet.

Die Wasserheizung 10 ist, in Durchströmrichtung der Heizwasserleitung 7 gesehen, unmittelbar vor den Brauchwassertanks 3 angeordnet. Der Vorlauf 8 der Heizwasserleitung 7 umgibt die Brauchwassertanks 3, um auch diese zu erwärmen.

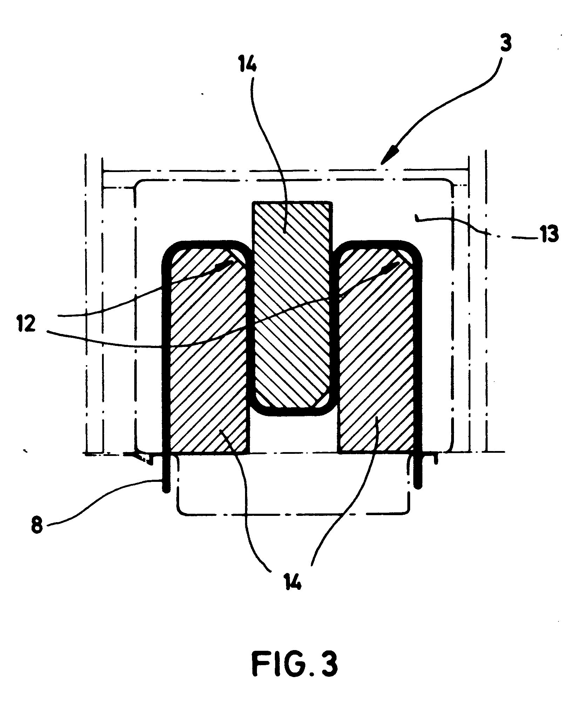

Zu diesem Zwecke ist, wie aus Fig. 3 erkennbar ist, der Vorlauf 8 der Heizwasserleitung 7 ziehharmonikaartig in Windungen 12 gelegt und auf der Unterseite 13 der Brauchwassertanks 3 anliegend angeordnet. Zwischen den einzelnen Windungen 12 sind Wärmeleitbleche 14 angeordnet, die ebenfalls an der Unterseite der Brauchwassertanks 3 anliegen und für einen noch besseren Wärmeübergang sorgen. Die geschlossene Heizwasserleitung 7 reicht bis dicht an die Zapfstelle 4 heran.

Vor der Zapfpumpe 6, also in einem Bereich der Brauchwasserleitung, der nicht unmittelbar neben der Heizwasserleitung 7 verläuft, ist ein Thermostat 15 vorgesehen. Dieses Thermostat 15 ist über eine nicht dargestellte Leitung mit der Wasserheizung 10 verbunden und schaltet diese ein, wenn die Temperatur vor der Zapfpumpe 6 einen bestimmten Wert unterschreitet, und aus, wenn die Temperatur vor der Zapfpumpe 6 einen bestimmten Wert überschreitet. In dem geschlossenen Heizwassersystem, also in der Heizwasserleitung 7, der Wasserheizung 10 und dem Ausgleichsgefäß 11 befindet sich ein Gemisch aus Wasser und Frostschutzmittel. Die Mischung ist so eingestellt, daß selbst bei Ausfall der Wasserheizung 10 ein Einfrieren dieser Mischung nicht möglich ist.

Im folgenden wird die Wirkungsweise der Erfindung näher erläutert.

Angenommen der Reisebus 1 wird bei winterlichen Verhältnissen zu einem Skiausflug eingesetzt, der einen längeren Aufenthalt vorsieht. Nach Abstellen des Reisebusses kühlt dieser aus. Die Temperatur der Brauchwasserleitung 5 fällt aufgrund der geringen Wärmekapazität verhältnismäßg schnell ab. Sobald die Temperatur vor der Zapfpumpe 6 auf einen Wert von 12°C absinkt, wird die Wasserheizung 10 durch den den Temperaturabfall anzeigenden Thermostat 15 angeschaltet. Die Wasserheizung 10 saugt aus dem Ausgleichsgefäß 11 Wasser-/Frostschutzgemisch an und pumpt dieses durch den Vorlauf 8 der Heizwasserleitung 7, nachdem dieses Gemisch zuvor in der Wasserheizung 10 auf eine Temperatur von ca. 85°C erwärmt wurde. Das Wasser-/Frostschutzgemisch gelangt zunächst durch den Vorlauf 8 auf die Unterseite 13 der Brauchwassertanks 3, genauer gesagt, gelangt das Gemisch zunächst zu dem in Fig. 3 linken und dann zu dem rechten Wassertank 3. Von dort strömt das erwärmte Gemisch, nachdem es an die Brauchwassertanks 3 bereits eine beträchtliche Wärmemenge abgegeben hat, dicht neben der Brauchwasserleitung 5. Hierdurch wird auch die Brauchwasserleitung 5 auf Temperatur gehalten. Da sich die Heizwasserleitung 7 bis an die Zapfstelle 4 der Toilette 2 erstreckt, wird das gesamte Brauchwasser temperiert.

Der Wärmeübergang im Bereich der Zapfpumpe 6 erfolgt ausschließlich über Wärmeleitung entlang der Brauchwasserleitung 5. Hierdurch wird gewährleistet, daß dieser Bereich der Brauchwasserleitung 5 stets am kältesten ist. Sobald der Thermostat 15 daher eine Temperatur anzeigt, die weit oberhalb des Gefrierpunktes liegt, kann sicher davon ausgegangen werden, daß alle anderen Stellen der Brauchwasserleitung 5 mindestens ebenfalls diese Temperatur erreicht haben. Beim Erreichen einer solchen Temperatur schaltet die Wasserheizung 10 ab.

Sobald die Temperatur im Bereich des Thermostats 15 wieder unter 12°C fällt, wird die Wasserheizung 10 wieder angeschaltet.

Eine weitere Erhöhung der Frostsicherheit des Brauchwassersystems des Reisebusses 1 wird dadurch erreicht, daß die Zapfpumpe 6 und damit auch der Thermostat 15 in unmittelbarer Nähe am, in Fig. 1 nicht dargestellten, mittleren Einstieg des Reisebusses angeordnet ist. Dieser Bereich des Reisebusses ist naturgemäß die kälteste Stelle, da in diesem Bereich die Brauchwasserleitung 5 lediglich durch ein Verkleidungsblech von der Außenumgebung getrennt ist.

Obwohl das in den Zeichnungen dargestellte Ausführungsbeispiel für die Zapfstelle einer Toilette beschrieben ist, kann die besondere Anordnung einer Heizwasserleitung an einer Brauchwasserleitung auch für andere Zapfstellen, so z.B. für Spülbecken in Miniküchen od. dgl. vorgesehen werden.

## Patentansprüche

1. Fahrzeug, insbesondere Reisebus, mit mindestens einer am Fahrzeug angeordneten Wasserzapfstelle für Handwaschbecken, Toilettenbecken oder dergleichen, mit mindestens einem Brauchwassertank und einer Brauchwasserleitung, die die Wasserzapfstelle mit dem Wassertank verbindet, sowie einer geschlossenen Heizwasserleitung mit einem Vorlauf und einem Rücklauf, **dadurch gekennzeichnet,** daß die Heizwasserleitung (7) zur Wärmeabgabe an das Brauchwasser zumindest streckenweise dicht neben der Brauchwasserleitung (5) angeordnet ist, den Brauchwassertank (3) umgibt und bis dicht an die Wasserzapfstelle (4) heranreicht, wobei im Verlauf der Heizwasserleitung (7) eine Wasserheizung (10) und eine Umwälzpumpe angeordnet sind.

2. Fahrzeug nach Anspruch 1, **dadurch gekennzeichnet,** daß der Vorlauf (8) der Heizwasserleitung (7) näher an der Brauchwasserleitung (5) angeordnet ist als der Rücklauf (9).

3. Fahrzeug nach Anspruch 1 oder 2, **dadurch gekennzeichnet,** daß die Heizwasserleitung (7) die Brauchwasserleitung (5) berührt.

4. Fahrzeug nach einem der Ansprüche 1 bis 3, **dadurch gekennzeichnet,** daß die Heizwasserleitung (7) an mindestens einer Seite (13) des Brauchwassertanks (3) in im wesentlichen ziehharmonikaartigen Windungen anliegt.

5. Fahrzeug nach einem der Ansprüche 1 bis 4, **dadurch gekennzeichnet,** daß die Windungen (12) an der Unterseite (13) des Brauchwassertanks anliegen.

6. Fahrzeug nach einem der Ansprüche 1 bis 5, **dadurch gekennzeichnet,** daß zwischen den Windungen (12) der Heizwasserleitung (7) Wärmeleitbleche (14) angeordnet sind, die flächig an der Unterseite (13) des Brauchwassertanks (3) anliegen.

7. Fahrzeug nach einem der Ansprüche 1 bis 6, **dadurch gekennzeichnet,** daß die Wasserheizung (10) in Durchströmrichtung der Heizwasserleitung (7) im wesentlichen unmittelbar vor dem Brauchwassertank (3) angeordnet ist.

8. Fahrzeug nach einem der Ansprüche 1 bis 7, **dadurch gekennzeichnet,** daß in der Brauchwasserleitung (5) ein Thermostat (15) zur Steuerung der Wasserheizung (10) angeordnet ist.

**Claims**

1. Vehicle, in particular a long-distance coach, having at least one water tap point disposed on the vehicle for a handwash basin, toilet basin or the like, having at least one service water tank and a service water conduit, connecting the water tap point to the water tank, and a closed hot water conduit with a forward circuit and a return circuit, characterised in that the hot water conduit (7) for delivering heat to the service water is disposed, at least in stretches, close beside the service water conduit (5), surrounds the service water tank (3) and extends to close to the water tap point (4), a water heater (10) and a circulating pump being disposed within the course of the hot water conduit (7).

2. Vehicle according to Claim 1, characterised in that the forward circuit (8) of the hot water conduit (7) is disposed closer to the service water conduit (5) than is the return circuit (9).

3. Vehicle according to Claim 1 or 2, characterised in that the hot water conduit (7) touches the service water conduit (5).

4. Vehicle according to one of Claims 1 to 3, characterised in that the hot water conduit (7), lies against at least one side (13) of the service water tank (3), in essentially concertina-type windings.

5. Vehicle according to one of Claims 1 to 4, characterised in that the windings (12) lie against the underside (13) of the service water tank.

6. Vehicle according to one of Claims 1 to 5, characterised in that there are disposed, between the windings (12) of the hot water conduit (7), heat conducting panels (14), which lie with their surface against the underside (13) of the service water tank (3).

7. Vehicle according to one of Claims 1 to 6, characterised in that the water heater (10) is disposed, in the direction of flow of the hot water conduit (7), essentially directly in front of the service water tank (3).

8. Vehicle according to one of Claims 1 to 7, characterised in that there is disposed in the service water conduit (5) a thermostat (15) for controlling the water heater (10).

**Revendications**

1. Véhicule, en particulier autocar de grand tourisme, comprenant au moins une prise d'eau pour lavabo, cuvette de toilette ou analogue disposée sur le véhicule, au moins un réservoir d'eau sanitaire et une conduite d'eau sanitaire qui relie la prise d'eau au réservoir d'eau sanitaire, ainsi qu'une conduite d'eau de chauffage en circuit fermé avec une conduite d'alimentation et une conduite de retour, **caractérisé en ce** que, pour la transmission de chaleur à l'eau sanitaire, la conduite d'eau de chauffage (7) est disposée, au moins par endroits, immédiatement à côté de la conduite d'eau sanitaire (5), qu'elle entoure le réservoir d'eau sanitaire (3) et s'étend jusqu'à proximité immédiate de la prise d'eau (4), un système de chauffage d'eau (10) et une pompe de circulation étant disposés dans le tracé de la conduite d'eau de chauffage (7)

2. Véhicule selon la revendication 1, caractérisé en ce que la conduite d'alimentation (8) de la conduite d'eau de chauffage (7) est disposée plus près de la conduite d'eau sanitaire (5) que la conduite de retour (9).

3. Véhicule selon l'une des revendications 1 ou 2, caractérisé en ce que la conduite d'eau de chauffage (7) touche la conduite d'eau sanitaire (5).

4. Véhicule selon l'une des revendications 1 à 3, caractérisé en ce que la conduite d'eau de chauffage (7) est appliquée, au moins sur l'un des côtés (13) du réservoir d'eau sanitaire (3), en spires selon un tracé sensiblement en accordéon.

5. Véhicule selon l'une des revendications 1 à 4, caractérisé en ce que les spires (12) sont appliquées contre la face inférieure (13) du réservoir d'eau sanitaire.

6. Véhicule selon l'une des revendications 1 à 5, caractérisé en ce qu'entre les spires (12) de la conduite d'eau de chauffage (7) sont disposées des tôles conductrices de chaleur (14) qui sont appliquées à plat contre la face inférieure (13) du réservoir d'eau sanitaire (3).

7. Véhicule selon l'une des revendications 1 à 6, caractérisé en ce que, dans le sens de circulation de la conduite d'eau de chauffage (7), le système de chauffage d'eau (10) est disposé immédiatement devant le réservoir d'eau sanitaire (3).

8. Véhicule selon l'une des revendications 1 à 7, caractérisé en ce que la conduite d'eau sanitaire (5) est équipée d'un thermostat (15) pour commander le système de chauffage d'eau (10).

FIG.1

EP 0 305 669 B1

FIG. 2

**FIG. 3**